# EUROPÄISCHE PATENTSCHRIFT

(11) **EP 2 804 829 B1**
(45) Veröffentlichungstag und Bekanntmachung des Hinweises auf die Patenterteilung: **04.01.2017**
(21) Anmeldenummer: 13701022.9
(22) Anmeldetag: 18.01.2013
(51) Int. Cl.: B66F 9/075, B60G 21/073, B60G 21/05

(54) **FLURFÖRDERZEUG**
INDUSTRIAL TRUCK
CHARIOT DE MANUTENTION

(30) Priorität: 20.01.2012 DE 202012100213 U
(43) Veröffentlichungstag der Anmeldung: 26.11.2014
(73) Patentinhaber: Hubtex Maschinenbau GmbH & Co. Kg, 36041 Fulda (DE)
(72) Erfinder: KELLER, Jürgen, 36137 Großenlüder (DE)
(74) Vertreter: Kluin, Jörg-Eden
(86) Internationale Anmeldenummer: PCT/EP2013/050879
(87) Internationale Veröffentlichungsnummer: WO 2013/107836

(56) Entgegenhaltungen:
- GB-A- 425 092
- US-A- 3 439 927
- US-A1- 2006 027 990

## Beschreibung

Die Erfindung betrifft ein Flurförderzeug, insbesondere einen Gabelstapler.

Bei Flurförderzeugen besteht ein Zielkonflikt zwischen möglichst hoher Standsicherheit und Anpassungsfähigkeit an Bodenunebenheiten. Das Flurförderzeug soll auch bei hohen Hubhöhen möglichst standsicher sein. Andererseits ist es erforderlich, dass sich sein Fahrwerk Bodenunebenheiten anpassen kann.

Es sind vierrädrige Flurförderzeuge bekannt, bei denen die beiden hinteren Räder durch eine pendelnde Starrachse verbunden sind, die an einem Punkt (Drehlager) mit dem Flurförderzeug bzw. dem Fahrgestell des Flurförderzeugs verbunden ist. Damit ergibt sich, ähnlich wie bei einem dreirädrigen Flurförderzeug, ein Standdreieck und eine statische Überbestimmung und damit Probleme bei unebenen Böden sind vermieden. Nachteilig hierbei ist, dass dies zu einer höheren Umsturzneigung führt, als bei einem Flurförderzeug mit Standviereck, da der Schwerpunkt näher an den seitlichen Kippkanten liegt. Diese verlaufen durch die Lasträder und treffen sich im Auflagepunkt der pendelnden Starrachse.

Ebenfalls bekannt sind Flurförderzeuge mit einem Pendelrahmen. Nachteil dieses Pendelrahmens ist, dass er kostenintensiv ist und durch die Rahmenhinterzüge mehr Bauraum benötigt. Zudem ist er festigkeitstechnisch aufwendig zu konstruieren.

Ebenfalls bekannt sind Flurförderzeuge mit hydraulischem Niveauausgleich der Lasträder. Nachteilig hierbei ist, dass dies nur auf guten, also relativ ebenen Böden funktioniert. Bei unebenen Böden muss zuviel Öl durch relativ kleine Querschnitte zwischen den Zylindern hin- und her fließen. Rahmenverspannungen und -brüche sind die Folge.

US 3 439 927 A offenbart ein Gabelstapler, mit einem Fahrgestell, mit Rädern, wobei mindestens zwei Räder mit Hilfe von zwei Radaufhängungen an dem Fahrgestell gelagert sind, und das Flurförderzeug vier Räder umfasst, von denen zwei Lasträder nahe der Tragvorrichtung angeordnet sind, und zwei weitere Hinterräder weiter entfernt von der Tragvorrichtung angeordnet sind und nur die Hinterräder mit Hilfe der derartigen Radaufhängungen an dem Fahrgestell gelagert sind, wobei die Radaufhängungen an dem Fahrgestell um zwei Achsen kippbar gelagert sind, wobei die beiden Radaufhängungen mechanisch miteinander gekoppelt sind und die mechanische Kopplung mittels einer Koppelstange erfolgt, die mit den Radaufhängungen gelenkig verbunden ist.

Die US 2006/027990 A1 zeigt ein Rolldämpfungssystem für ein Kraftfahrzeug. Es soll ein erhöhter Widerstand gegen im Wesentlichen simultane Rotation zweier gegenüberliegender Radaufhängungen in die gleiche Rotationsichtung und verringerter Widerstand gegen Rotation in gegensinnige Richtung erreicht werden.

Die GB 425092 A zeigt ein Fahrzeug mit einem Fahrgestell, mit Rädern, wobei mindestens zwei Räder mit Hilfe von zwei Radaufhängungen an dem Fahrgestell gelagert sind, und die Radaufhängungen an dem Fahrgestell um zwei Achsen kippbar gelagert sind, wobei jede Radaufhängung um genau eine Achse kippbar an dem Fahrgestell gelagert ist und das Flurförderzeug zwei Hinterräder umfasst, wobei die Hinterräder mit Hilfe der derartigen Radaufhängungen an dem Fahrgestell gelagert sind und die beiden Radaufhängungen mechanisch miteinander gekoppelt sind wobei die mechanische Kopplung mittels einer Koppelstange erfolgt, die mit den Radaufhängungen gelenkig verbunden ist.

Die Erfindung hat es sich zur Aufgabe gemacht, ein Flurförderzeug, insbesondere einen Gabelstapler zu schaffen, der hinsichtlich zumindest eines der genannten Nachteile verbessert ist. Diese Aufgabe wird durch das in Anspruch 1 wiedergegebene Flurförderzeug gelöst.

Das erfindungsgemäße Flurförderzeug, insbesondere Gabelstapler weist ein Fahrgestell und Räder auf. Mindestens zwei Räder sind mit Hilfe von zwei Radaufhängungen an dem Fahrgestell gelagert. Die Radaufhängungen sind an dem Fahrgestell um zwei Achsen kippbar gelagert. Jede Radaufhängung ist also um genau eine Achse kippbar an dem Fahrgestell gelagert.

Jede Radaufhängung lagert bevorzugt genau ein Rad an dem Fahrgestell.

Bei diesen Rädern kann es sich um Mehrfachräder, beispielsweise Zwillingsräder handeln. Im Falle von Zwillingsrädern sind dann also vier Einzelräder derart gelagert.

### Das erfindungsgemäißge

Flurförderzeug umfasst vier Räder, von denen zwei nahe der Tragvorrichtung angeordnet sind, also auch als Lasträder bezeichnet werden. Zwei weitere Räder sind weiter entfernt von der Tragvorrichtung angeordnet, also als Hinterräder. Bei allen Rädern kann es sich um Mehrfachräder handeln.

Nur die Hinterräder sind mit den derartigen Radaufhängungen an dem Fahrgestell gelagert.

Das Flurförderzeug umfasst bevorzugt eine Tragvorrichtung, insbesondere eine Traggabel.

Mit dem Begriff "Fahrgestell" wird im Rahmen dieser Druckschrift der Fahrzeugrahmen und in einer weiten Verwendung dieses Begriffs bei einer selbsttragenden Karosserie ohne Fahrzeugrahmen auch diese selbsttragende Karosserie bezeichnet.

Mit Vorteil sind die Achsen voneinander beabstandet und besonders bevorzugt verlaufen sie parallel zueinander. Die Achsen fluchten also bevorzugt nicht.

Besonders bevorzugt verlaufen die Achsen parallel zu der Fahrtrichtung, bei der sich das Flurförderzeug genau in Richtung seiner Tragvorrichtung bewegt.

Bevorzugt ist die kippbare Lagerung der Radaufhängungen um zwei Achsen mit Drehlagern realisiert.

Vorzugsweise umfassen die Radaufhängungen starre Wippen. Vorzugsweise sind starre Wippen vorgesehen, die um die Achsen kippbar an dem Fahrgestell gelagert sind. Starre Elemente sind im Rahmen dieser Druckschrift insbesondere solche, die nicht bewusst auf Verformung wie Torsion, Durchbiegung oder ähnliches ausgelegt sind. Hierdurch können mit relativ geringem Herstellungsaufwand robuste, dauerhaltbare Radaufhängungen erreicht werden. In einer Ausführungsform bestehen die Radaufhängungen ausschließlich aus starren Elementen.

Die beiden Radaufhängungen sind erfindungsgemäß mechanisch miteinander gekoppelt und erfüllen erst durch diese Kopplung ihre Tragfunktion. Mit anderen Worten liegt also eine Bewegungskopplung der beiden Radaufhängungen vor und diese ist Voraussetzung für die tragende Funktion der Radaufhängungen.

Die Bewegungskopplung erfolgt bevorzugt derart, dass bei einer Bewegung eines Rades nach oben zwingend die Bewegung des anderen Rades nach unten vorliegt und umgekehrt.

Die mechanische Kopplung erfolgt erfindungsgemäß mittels einer Koppelstange, die mit den Radaufhängungen gelenkig verbunden ist. Das Flurförderzeug weist im Übrigen keine Achsfederung bzw. Radfederung auf.

Die Koppelstange ist bevorzugt jeweils mittels eines -bevorzugt jeweils an einem Ende der Koppelstange angeordneten- Gelenks an den Wippen -bevorzugt an deren zueinander weisenden Enden- angeordnet. Weiter bevorzugt verläuft die Koppelstange quer zu der Fahrtrichtung, bei der sich das Flurförderzeug genau in Richtung seiner Tragvorrichtung bewegt.

Mit Vorteil ist die Koppelstange längenverstellbar. Weiter bevorzugt ist sie derart ausgestaltet, dass sie von dem Fahrer des Flurförderzeugs während der Fahrt längenverstellt werden kann. Durch die längenverstellbare Koppelstange wird erreicht, dass das Flurförderzeug auf einfache Art und Weise um eine Achse, beispielsweise seine Querachse, geneigt werden kann (Nicken).

Wenn die Koppelstange einen Hydraulikzylinder aufweist, dann kann sie auf besonders robuste und komfortable Weise längenverstellbar ausgeführt sein.

In einer Ausführungsform ist, bevorzugt an dem Hydraulikzylinder, ein Druckspeicher vorgesehen. Hierdurch kann der zur Verfügung stehende Volumenstrom in dem Hydraulikkreislauf gesteigert werden bzw. es kann eine kleinere Pumpe verwendet werden.

In einer Ausführungsform umfasst die Koppelstange ein Dämpfungs- und/oder Federelement. Durch das Dämpfungs- und/oder Federelement kann der Fahrkomfort des Flurförderzeugs erhöht werden.

In einer Ausführungsform ist der Hydraulikzylinder mit einem Dämpfungs- und/oder Federelement verbunden.

Mit Vorteil ist der Abstand der Achsen zueinander kleiner als der Abstand der zwei mit Hilfe der derartigen Radaufhängungen gelagerten Räder zueinander.

Die Wippen weisen bevorzugt eine Abwinkelung mit einem Knick im Bereich der Achsen auf. Der Winkel dieses Knicks liegt bevorzugt zwischen 115 und 155 Grad und beträgt besonders bevorzugt etwa 135 Grad.

Es ist jedoch auch denkbar, dass der Abstand der Achsen zueinander größer als der Abstand der zwei mit Hilfe der Radaufhängungen gelagerten Räder zueinander ist. Hierdurch kann die Standsicherheit weiter gesteigert werden.

Mit Vorteil sind alle Räder um 90° schwenkbar, es handelt sich also in der Ausführungsform als Gabelstapler um einen Vierwegestapler. In einer anderen Ausführungsform sind alle Räder beliebig schwenkbar, es handelt sich also in der Ausführungsform als Gabelstapler um einen Mehrwegestapler.

Die Erfindung soll nun anhand von in den Zeichnungen gezeigten Ausführungsbeispielen näher erläutert werden. Es zeigen:
- Fig. 1: eine schematische Rückansicht eines aus dem Stand der Technik bekannten Gabelstaplers, bei dem die hinteren Räder durch eine pendelnde Starrachse verbunden sind;
- Fig. 2: eine schematische Rückansicht eines aus dem Stand der Technik bekannten Gabelstaplers mit Pendelrahmen;
- Fig. 3: eine schematische Rückansicht eines ersten Ausführungsbeispiels eines erfindungsgemäßen Gabelstaplers, teilweise durchscheinend;
- Fig. 4: eine schematische Rückansicht eines zweiten Ausführungsbeispiels eines erfindungsgemäßen Gabelstaplers, teilweise durchscheinend, mit Dämpfungs- und/oder Federelement;
- Fig. 5: eine teilweise durchscheinende, schematische Rückansicht eines dritten Ausführungsbeispiels eines erfindungsgemäßen Gabelstaplers, mit Hydraulikzylinder;
- Fig. 6: eine Ansicht wie in Fig. 5, mit gegenüber Fig. 5 längenverstellter Koppelstange;
- Fig. 7: eine Ansicht ähnlich Fig. 5, mit an einen schrägen Boden angepassten Radaufhängungen;
- Fig. 8: eine Ansicht wie in Fig. 7 mit Druckspeicher;
- Fig. 9: eine perspektivische Darstellung eines Ausschnitts eines weiteren Ausführungsbeispiels eines erfindungsgemäßen Gabelstaplers, bei dem der Abstand der Achsen der Drehlager zueinander größer ist als der Abstand der Hinterräder zueinander.

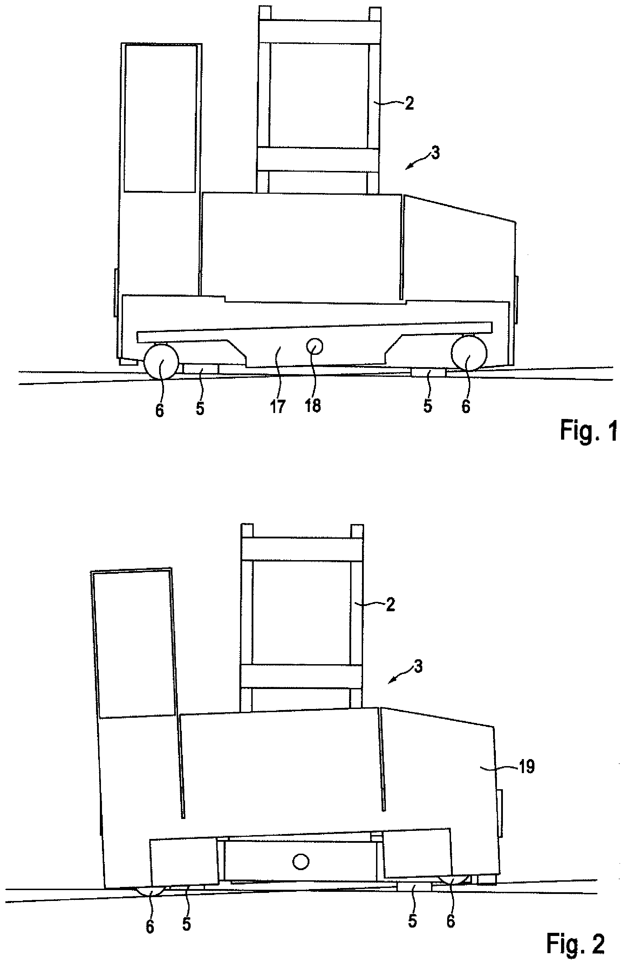

Fig. 1 zeigt einen aus dem Stand der Technik bekannten Gabelstapler. Dieser weist eine Tragvorrichtung 2 auf, mit einer Traggabel 3, die, wie auch in den Fig. 2 bis 8, durch den übrigen Gabelstapler verdeckt und daher nicht gezeigt ist. Es sind zwei in der Nähe der Tragvorrichtung 2 angeordnete Lasträder 5 und zwei Hinterräder 6 vorgesehen. Die Hinterräder 6 sind an einer pendelnden Starrachse 17 angeordnet, die an einem einzigen Lager 18 mit dem übrigen Gabelstapler schwenkbar verbunden ist.

Der in Fig. 2 gezeigte, ebenfalls aus dem Stand der Technik bekannte Gabelstapler, weist anstelle der pendelnden Starrachse 17 einen Pendelrahmen 19 auf.

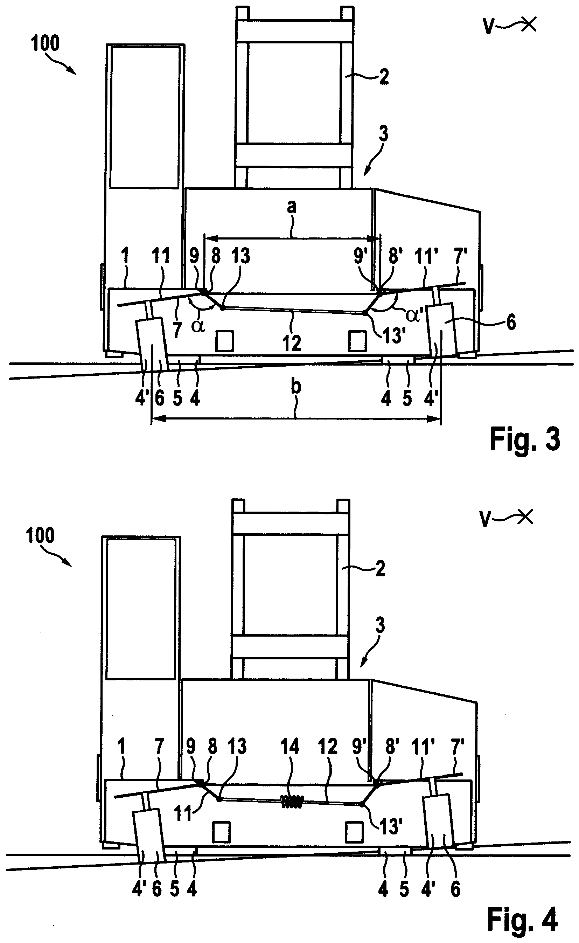

Fig. 3 zeigt ein erstes Ausführungsbeispiel eines erfindungsgemäßen Flurförderzeugs 100, welches in den gezeigten Figuren ein Gabelstapler ist, der einen motorischen Antrieb aufweist und für den innerbetrieblichen Warenumschlag und Transport vorgesehen ist. Der Gabelstapler weist eine Tragvorrichtung 2 und eine in der Fig. durch den übrigen Gabelstapler verdeckte Traggabel 3 auf. In der Nähe der Tragvorrichtung 2 sind zwei Lasträder 5 angeordnet. Weiter von der Tragvorrichtung 2 entfernt sind zwei Hinterräder 6 angeordnet. Die Hinterräder 6 sind mit anderen Worten gegenüber der Lasträder 5 angeordnet. Alle vier Räder 4, 4' können beliebig gelenkt werden, es handelt sich also um einen Mehrwegestapler. Das Flurförderzeug weist einen Rahmen auf, hat also keine selbst tragende Karosserie.

Die beiden Hinterräder 6 sind mit Hilfe von zwei Radaufhängungen 7, 7' an dem Fahrgestell 1 gelagert. Die Radaufhängungen 7, 7' sind mittels zweier Drehlager 8, 8' an dem Fahrgestell 1 um Achsen 9, 9' schwenkbar bzw. kippbar gelagert. Die Achsen 9, 9' verlaufen in den Fig. 3 bis 8 senkrecht zur Bildebene und sind daher nur als Punkte erkennbar. Die Drehlager 8, 8' sind voneinander entfernt und die Achsen 9, 9' verlaufen parallel zueinander und zueinander beabstandet.

Mit dem Kreuz V ist in den Fig. 3 bis 8 die Fahrtrichtung des Gabelstaplers symbolisiert, bei der sich der Gabelstapler genau in Richtung seiner Tragvorrichtung bewegt. Diese Richtung verläuft senkrecht zur Bildebene und von dem Betrachter weg. Die Achsen 9, 9' der Drehlager verlaufen parallel zu dieser Fahrtrichtung V.

Die beiden Radaufhängungen 7, 7' weisen gleichartige, starre Wippen 11, 11' auf. An den zueinander weisenden Enden der Wippen 11, 11' sind diese mittels zweier Gelenke 13, 13' durch eine Koppelstange 12 verbunden. Die Wippen 11, 11' und die Koppelstange 12 sind dabei starre Elemente, die nicht bewusst auf Torsion, Durchbiegung oder ähnliches ausgelegt sind. Die Wippen 11, 11' weisen in den in den Fig. 3 bis 8 gezeigten Ausführungsbeispielen, bei denen der Abstand b der Hinterräder größer als der Abstand a der Achsen 9 zueinander ist, eine Abwinkelung mit einem Knick im Bereich der Drehlager 8, 8' auf. Der Winkel α, α' dieses Knicks beträgt etwa 135 Grad. Wenn das Überfahren einer Bodenunebenheit das Anheben eines Hinterrades 6 bewirkt, dann resultiert aus dieser Aufwärtsbewegung eine über die Koppelstange 12 in das diesem Rad zugewandte Ende der gegenüberliegenden Wippe eingeleitete Zugkraft. Diese bewirkt (insoweit ähnlich wie bei der pendelnden Starrachse) ein Nachuntenbewegen des anderen Hinterrades 6. Bei den Wippen 11, 11' der in den Fig. 3 bis 8 gezeigten Ausführungsbeispiele ist das Drehlager 8, 8' zwischen den Enden der Wippen angeordnet, die Wippen 11, 11'sind also nicht endseitig an dem Rahmen 1 gelagert, sondern in einem zwischen ihren Enden angeordneten Bereich. Das in Fig. 3 gezeigt Flurförderzeug ist ungefedert.

Bei dem in Fig. 4 gezeigten Ausführungsbeispiel weist die Koppelstange 12 ein Dämpfungs- und/oder Federelement 14 auf. Hierdurch ergibt sich eine Fahrwerksfederung.

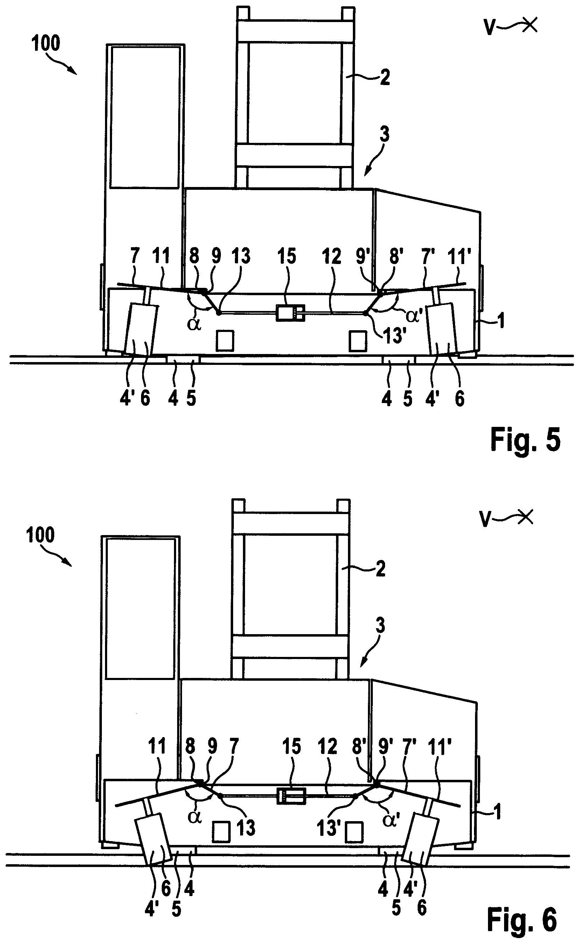

Bei dem in Fig. 5 gezeigten Ausführungsbeispiel weist die Koppelstange 12 einen Hydraulikzylinder 15 auf. Die Koppelstange 12 ist hierdurch längenverstellbar. Wie ein Vergleich der Fig. 5 und 6 zeigt, können die Radaufhängungen 7, 7' daher ein Neigen des Flurförderzeugs 100 bewirken (Fahrgestell bzw. Rahmenneigung). Die Neigung entspricht hierbei einer Neigung um eine quer zur Fahrtrichtung V, bei der sich das Flurförderzeug genau in Richtung seiner Tragvorrichtung bewegt ausgerichteten Achse, ist bei dieser Fahrtrichtung also ein Nicken, wobei die Achse durch die Aufstandspunkte der Lasträder bzw. die Achsen der Lasträder 5 verlaufen kann. Die Fig. 5 und 6 können auch als Durchfahren einer Bodenwelle interpretiert werden. In Fig. 5 sind die Lasträder 5 im Wellental und die Hinterräder 6 auf dem Wellenberg und in Fig. 6 ist es umgekehrt. Durch Längenverstellung der Koppelstange 12 kann eine Kompensation dieser Bodenwelle erreicht werden. Das Fahrgestell 1 kann bei dem Durchfahren der Bodenwelle eine bestimmte Lage, etwa eine Horizontallage, beibehalten. Die Längenverstellung der Koppelstange 12 kann selbsttätig erfolgen.

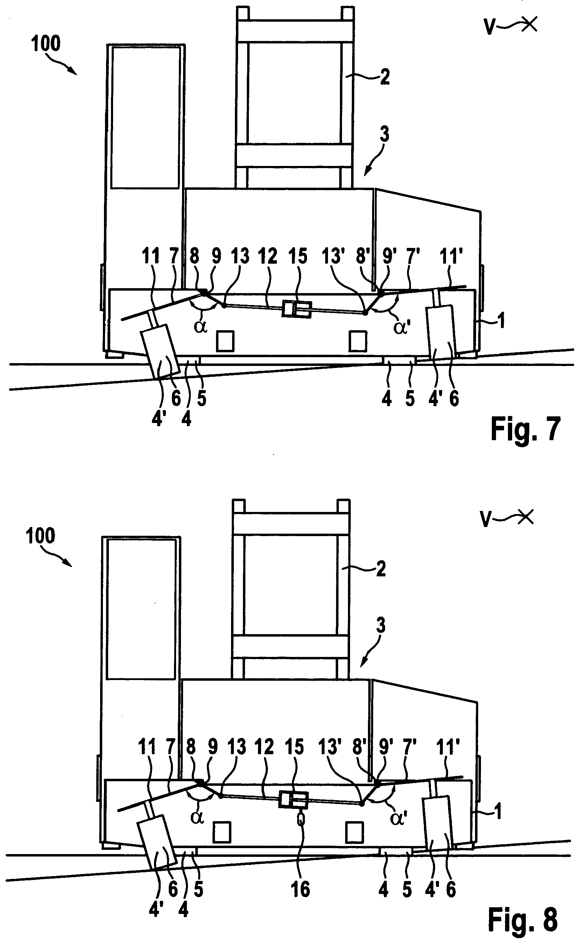

Fig. 7 zeigt die Reaktionen der Radaufhängungen 7, 7' auf eine Bodenunebenheit, die eine Kombination aus Bodenschräge und Bodenwelle darstellt. Die hinteren Räder 6 befinden sich verglichen mit den Lasträdern 5 auf einem insgesamt tieferen, schrägen Niveau.

Fig. 8 zeigt eine beispielhafte Integration eines Druckspeichers 16 in den Hydraulikkreislauf des Hydraulikzylinders.

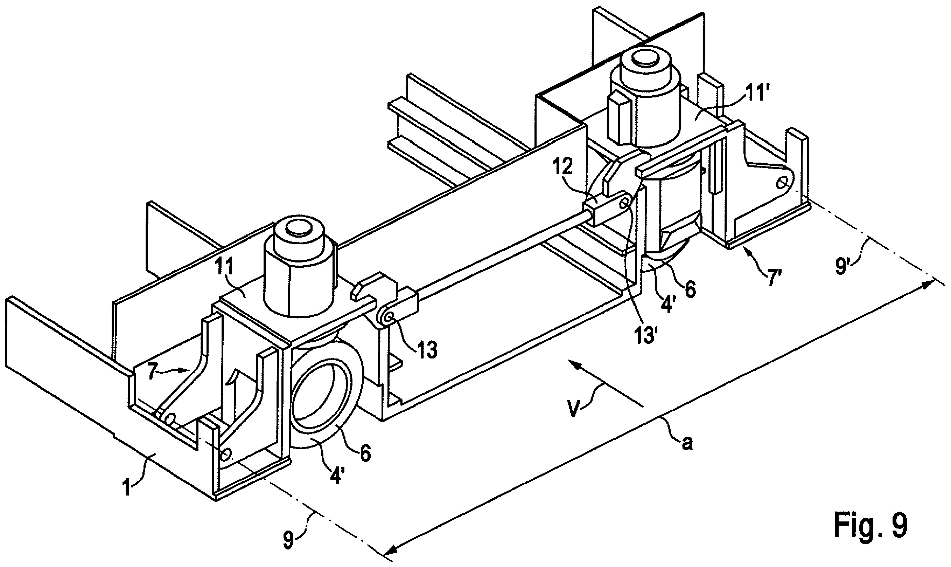

Fig. 9 zeigt ein Ausführungsbeispiel, bei dem die Drehlager 8, 8' so angeordnet sind, dass die Achsen 9, 9' einen möglichst großen Abstand a zueinander aufweisen. Die Wippen 11, 11' sind hier jeweils endseitig, mit ihren voneinander wegweisenden Enden, mit den in Fig. 9 nicht dargestellten Drehlagern 8, 8' an dem Rahmen 1 gelagert. Der Abstand a der Achsen 9, 9' zueinander ist bei dem in Fig. 9 gezeigten Ausführungsbeispiel, anders als in den in den Fig. 3 bis 8 gezeigten Ausführungsbeispielen, größer als der Abstand b der Hinterräder 6 zueinander. Hierdurch kann sich eine besonders hohe Standsicherheit ergeben.

Das gezeigte erfindungsgemäße Flurförderzeug weist also zumindest bei zwei Rädern 4' keine Einzelradaufhängung auf. Die Radaufhängungen 7, 7' dieser beiden Räder 4' ist auch keine pendelachs-artige Aufhängung dieser Räder an einer Starrachse, bei der die Pendelachse lediglich über ein einziges Drehlager an dem Fahrgestell angeordnet ist.

Der Vorteil der gezeigten erfindungsgemäßen Anordnung ist ein sehr einfacher Rahmenaufbau und der schnelle Ausgleich von Bodenunebenheiten (wie beim "richtigen" Pendelrahmen) sowie eine gute Standsicherheit.

Bei allen gezeigten erfindungsgemäßen Ausführungsformen ist, anders als etwa bei einer Einzelradaufhängung, eine voneinander abhängige Vertikalbewegung der beiden Hinterräder gegeben. Das nach unten bewegte Hinterrad 6 bewirkt nach dem Überfahren der Bodenunebenheit die Rückstellkraft für das sich nach oben bewegte Hinterrad 6. Die gekoppelten Radaufhängungen 7, 7' bewirken einen Bodenausgleich bzw. einen Niveauausgleich des Bodens.

Wie bei einer pendelnden Starrachse ist bei allen gezeigten Ausführungsbeispielen der Erfindung eine mechanische Überbestimmung vermieden. Anders als bei einer pendelnden Starrachse ergibt sich bei dem erfindungsgemäßen Flurförderzeug jedoch kein Standdreieck, sondern ein Standviereck. Die Kippachsen verlaufen jeweils durch ein Lastrad 5 und ein Drehlager 8, 8'. Somit ist die Standsicherheit erhöht.

### Bezugszeichenliste:

- 100: Flurförderzeug
- 1: Rahmen bzw. Fahrgestell
- 2: Tragvorrichtung
- 3: Traggabel
- 4, 4': Räder
- 5: Lasträder
- 6: Hinterräder
- 7, 7': Radaufhängung
- 8, 8': Drehlager
- 9, 9': Achsen
- 10: freibleibend
- 11, 11': Wippen
- 12: Koppelstange
- 13, 13': Gelenk
- 14: Dämpfungs- und/oder Federelement
- 15: Hydraulikzylinder
- 16: Druckspeicher
- 17: pendelnde Starrachse
- 18: Lager
- 19: Pendelrahmen
- V: Fahrtrichtung, bei der sich das Flurförderzeug genau in Richtung seiner Tragvorrichtung bewegt.
- a, b: Abstand
- α, α': Winkel

## Patentansprüche

1. Flurförderzeug (100), insbesondere Gabelstapler, mit einem Fahrgestell (1), mit Rädern (4, 4'),
wobei
mindestens zwei Räder (4') mit Hilfe von zwei Radaufhängungen (7, 7') an dem Fahrgestell (1) gelagert sind, und die Radaufhängungen (7, 7') an dem Fahrgestell (1) um zwei Achsen (9, 9') kippbar gelagert sind, wobei jede Radaufhängung (7, 7') um genau eine Achse (9, 9') kippbar an dem Fahrgestell (1) gelagert ist und das Flurförderzeug (100) vier Räder (4, 4') umfasst, von denen zwei Lasträder (5) nahe der Tragvorrichtung angeordnet sind, und zwei weitere Hinterräder (6) weiter entfernt von der Tragvorrichtung angeordnet sind und nur die Hinterräder (6) mit Hilfe der derartigen Radaufhängungen (7, 7') an dem Fahrgestell (1) gelagert sind und die beiden Radaufhängungen (7, 7') mechanisch miteinander gekoppelt sind und erst durch diese Kopplung ihre Tragfunktion erfüllen, wobei die mechanische Kopplung mittels einer Koppelstange (12) erfolgt, die mit den Radaufhängungen (7, 7') gelenkig verbunden ist, wobei das Flurförderzeug im Übrigen keine Achsfederung bzw. Radfederung aufweist.

2. Fahrzeug nach Anspruch 1, **dadurch gekennzeichnet, dass** die Achsen (9, 9') parallel zueinander beabstandet verlaufen.

3. Fahrzeug nach Anspruch 1 oder 2, **dadurch gekennzeichnet, dass** die Radaufhängungen (7, 7') starre Wippen (11,11') umfassen.

4. Fahrzeug nach einem der Ansprüche 1 bis 3, **dadurch gekennzeichnet, dass** die Koppelstange (12) längenverstellbar ist.

5. Fahrzeug nach einem der Ansprüche 1 bis 4, **dadurch gekennzeichnet, dass** die Koppelstange (12) einen Hydraulikzylinder (15) aufweist.

6. Fahrzeug nach Anspruch 5, **dadurch gekennzeichnet, dass** an dem Hydraulikzylinder (15) ein Druckspeicher (16) vorgesehen ist.

7. Fahrzeug nach einem der Ansprüche 1 bis 6, **dadurch gekennzeichnet, dass** die Koppelstange (12) ein Dämpfungs- und/oder Federelement (14) umfasst.

8. Fahrzeug nach einem der Ansprüche 1 bis 7, **dadurch gekennzeichnet,**
**dass** der Abstand (a) der Achsen (9) zueinander kleiner als der Abstand (b) der zwei mit Hilfe der Radaufhängungen (7, 7') gelagerten Räder (4') zueinander ist.

9. Fahrzeug nach einem der Ansprüche 1 bis 8, **dadurch gekennzeichnet,**
**dass** die Räder (4, 4') beliebig schwenkbar sind.

## Claims

1. An industrial truck (100), in particular a forklift struck, with a chassis (1) which has wheels (4, 4')
whereby
at least two wheels (4') are mounted onto the chassis (1) by means of two wheel suspensions (7, 7'), and the wheel suspensions (7, 7') are mounted onto the chassis (1) around two axles (9, 9') in a tiltable manner, whereby each wheel suspension (7, 7') is mounted specifically around one axle (9, 9') on the chassis (1) and the industrial truck (100) has four wheels (4, 4'), of which two are load wheels (5) positioned near the load-bearing device, and the two others are rear wheels (6) positioned further away from the load-bearing device, and only the rear wheels (6) are mounted onto the chassis (1) by means of these types of wheel suspensions (7, 7'), and both wheel suspensions (7, 7') are coupled together mechanically, and first fulfil their load-bearing function through this coupling, whereby the mechanical coupling is achieved using a coupling rod (12), which is connected flexibly to the wheel suspensions (7, 7'), whereby the industrial truck otherwise has no other axle suspension or wheel suspension.

2. A vehicle according to claim 1, **characterised in that** the axles (9, 9') run parallel to each other with a space in between them.

3. A vehicle according to claim 1 or 2, **characterised in that** the wheel suspensions (7, 7') comprise fixed rockers (11, 11').

4. A vehicle according to one of the claims 1 to 3, **characterised in that** the length of the coupling rod (12) can be adjusted.

5. A vehicle according to one of the claims 1 to 4, **characterised in that** the coupling rod (12) has a hydraulic cylinder (15).

6. A vehicle according to claim 5, **characterised in that** the hydraulic cylinder (15) has a pressure accumulator (16).

7. A vehicle according to one of the claims 1 to 6, **characterised in that** the coupling rod (12) has a damping and/or spring element.

8. A vehicle according to one of the claims 1 to 7, **characterised in that** the distance (a) between the axles (9) is smaller than the distance (b) between the two wheels mounted by means of the wheel suspensions.

9. A vehicle according to one of the claims 1 to 8, **characterised in that** the wheels (4, 4') can optionally be pivotable.

## Revendications

1. Chariot de manutention (100), plus spécifiquement chariot élévateur à fourche, comportant un châssis (1), des roues (4, 4'),
dont
au moins deux roues (4') sont reliées au châssis (1) au moyen de deux suspensions de roue (7, 7') et les suspensions de roue (7, 7') sont reliées au châssis (1) de manière à basculer autour de deux axes (9, 9'), où chaque suspension de roue (7, 7') est reliée au châssis (1) de manière à basculer autour d'un seul axe (9, 9'). Ledit chariot de manutention (100) comporte quatre roues (4, 4') dont deux roues de charge (5) sont placées au plus près du dispositif porteur et deux autres roues arrière (6) sont plus éloignées du dispositif porteur, seules les roues arrière (6) sont reliées au châssis (1) à l'aide des suspensions de roue similaires (7, 7') et les deux suspensions de roue (7, 7') sont couplées mécaniquement l'une à l'autre et ne remplissent leur rôle porteur que par l'intermédiaire de cet accouplement, lequel accouplement mécanique s'effectue au moyen d'une barre de liaison (12) reliée aux suspensions de roue (7, 7') par une articulation, ledit chariot de manutention ne comportant pas d'autre suspension primaire ou de suspension de roue.

2. Véhicule selon la revendication 1, **caractérisé en ce que** les axes (9, 9') sont positionnés à distance l'un de l'autre et parallèlement.

3. Véhicule selon la revendication 1 ou 2, **caractérisé en ce que** les suspensions de roue (7, 7') comportent des releveurs rigides (11, 11').

4. Véhicule selon l'une des revendications 1 à 3, **caractérisé en ce que** la barre de liaison (12) est de longueur réglable.

5. Véhicule selon l'une des revendications 1 à 4, **caractérisé en ce que** la barre de liaison (12) comporte un vérin hydraulique (15).

6. Véhicule selon la revendication 5, **caractérisé en ce qu**'un accumulateur de pression (16) est disposé au niveau du vérin hydraulique (15).

7. Véhicule selon l'une des revendications 1 à 6, **caractérisé en ce que** la barre de liaison (12) comporte un élément d'amortissement et/ou un élément de suspension (14).

8. Véhicule selon l'une des revendications 1 à 7, **caractérisé en ce que** l'écart (a) entre les axes (9) est inférieur à l'écart (b) entre les deux roues (4') reliées au moyen des suspensions de roue (7, 7').

9. Véhicule selon l'une des revendications 1 à 8, **caractérisé en ce que** les roues (4, 4') sont orientables à volonté.
